# NEUE EUROPÄISCHE PATENTSCHRIFT

(11) **EP 1 660 301 B2**
(45) Veröffentlichungstag und Bekanntmachung des Hinweises auf die Entscheidung über den Einspruch: **16.06.2021**
(45) Hinweis auf die Patenterteilung: 02.11.2016
(21) Anmeldenummer: 04762730.2
(22) Anmeldetag: 30.08.2004
(51) Int. Cl.: B29C 49/12, B29C 49/58, B29C 33/26, B29K 67/00, B29C 49/06, B29C 49/36, B29C 49/64

(54) **VERFAHREN UND VORRICHTUNG ZUR BLASFORMUNG VON BEHÄLTERN**
METHOD AND DEVICE FOR BLOW-FORMING CONTAINERS
PROCEDE ET DISPOSITIF DE MOULAGE PAR SOUFFLAGE DE RECIPIENTS

(30) Priorität: 05.09.2003 DE 10340915; 08.04.2004 DE 102004018146
(43) Veröffentlichungstag der Anmeldung: 31.05.2006
(73) Patentinhaber: KHS Corpoplast GmbH, 22145 Hamburg (DE)
(72) Erfinder: JAKSZTAT, Wolf, 22547 Hamburg (DE); LINKE, Michael, 22926 Ahrensburg (DE); BAUMGARTE, Rolf, D-22926 Ahrensburg (DE); LITZENBERG, Michael, 21502 Geesthacht (DE); VOGEL, Klaus, 22885 Barsbüttel (DE); GODAU, Günther, 22145 Hamburg (DE)
(74) Vertreter: Eisenführ Speiser
(86) Internationale Anmeldenummer: PCT/DE2004/001917
(87) Internationale Veröffentlichungsnummer: WO 2005/023517

(56) Entgegenhaltungen:
- EP-A1- 1 314 535
- WO-A1-01/34370
- WO-A1-96/30190
- WO-A1-2005/092594
- DE-A- 3 729 166
- DE-A1- 19 545 024
- DE-A1- 19 934 320
- DE-T2- 69 808 918
- JP-A- H0 272 929
- JP-A- H0 274 319
- JP-A- 54 127 970
- JP-A- H11 314 269
- JP-A- S54 140 687
- US-A- 4 065 246
- US-A- 5 182 122
- US-A1- 2002 171 161
- US-B1- 6 514 451
- PATENT ABSTRACTS OF JAPAN Bd. 2000, Nr. 15, 6. April 2001 (2001-04-06) & JP 2000 343590 A (TOYO SEIKAN KAISHA LTD), 12. Dezember 2000 (2000-12-12)
- PATENT ABSTRACTS OF JAPAN Bd. 2000, Nr. 21, 3. August 2001 (2001-08-03) & JP 2001 088202 A (HOKKAI CAN CO LTD), 3. April 2001 (2001-04-03)

## Beschreibung

Die Erfindung betrifft ein Verfahren zur Blasformung von Behältern, bei dem ein Vorformling nach einer thermischen Konditionierung innerhalb einer Blasform von einer Reckstange gereckt und durch Blasdruckeinwirkung in den Behälter umgeformt wird und bei dem unter Druck stehendes Gas durch die Reckstange hindurch in den Behälter eingeleitet wird, wobei mindestens ein Teil des unter Druck stehenden Gases zur Blasformung durch die Reckstange hindurch gegen einen Bodenbereich des Behälters geleitet wird.

Die Erfindung betrifft darüber hinaus eine Vorrichtung zur Blasformung von Behältern, die mindestens eine Blasstation mit einer Blasform sowie mindestens einer Reckstange aufweist, sowie bei der die Reckstange an eine Versorgungseinrichtung zur Zufuhr von unter Druck stehendem Gas angeschlossen ist, wobei die Reckstange mindestens einen bis in den Bereich einer Reckstangenkuppe hinführenden Strömungsweg für das unter Druck stehende Gas zur Blasformung aufweist, um das Blasgas durch die Reckstange hindurch gegen einen Bodenbereich des Behälters zu leiten, wobei die Vorrichtung ausgebildet ist, dass mindestens ein Teil des unter Druck stehenden Gases zur Blasformung durch die Reckstange hindurch gegen einen Bodenbereich des Behälters geleitet wird.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufen-verfahren, bei denen die Vorformlinge zunächst in einem Spritzgußverfahren hergestellt, anschließend zwischen-gelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Eine detaillierte Beschreibung eines Recksystems einer Blasstation mit zugeordneter Reckstange erfolgt in der DE-OS 101 45 579. Die Reckstange ist hier als ein massiver Stab ausgebildet und die Blasluft wird der Blasform durch einen Anschlußkolben hindurch zugeführt, der einen größeren Innendurchmesser aufweist, als der Außendurchmesser der Reckstange beträgt. Hierdurch wird zwischen der Reckstange und einer Innenfläche des Anschlußkolbens ein Ringspalt bereitgestellt, durch den das unter Druck stehende Gas hindurchströmen kann.

Die Verwendung einer hohlen Reckstange ist beispielsweise aus der DE-OS 28 14 952 bekannt. Ein Anschluß für das unter Druck stehende Gas erfolgt hier über ein einer Reckstangenkuppe abgewandtes Ende der rohrartig ausgebildeten Reckstange. Eine Druckgaszuführung über das Ende einer hohlen Reckstange wird darüber hinaus in der DE 34 08 740 C2 beschrieben. Hier erfolgt ein Austritt des Blasgases in Richtung auf eine Seitenwandung des zu blasenden Behälters.

Aus den PATENT ANSTRACTS OF JAPAN Bd. 2000, Nr. 15, 6. April 2001 (2001-04-06) & JP 2000 343590 A (TOYO SEIKAN KAISHA LTD) ist es bekannt, durch eine Reckstange hindurch Kühlluft zur Durchführung einer Thermostabilisierung bis in den Bereich eines Behälterbodens zu leiten. Die Kühlluftzuführung erfolgt im Anschluss an eine Blasformung des Behälters.

Aus den PATENT ABSTRACTS OF JAPAN Bd. 2000, Nr. 21, 3. August 2001 (2001-08-03) & JP 2001 088202 A (HOKKAI CAN CO LTD) ist es bereits bekannt, eine Reckstange mit einer Mehrzahl von Ausströmöffnungen zu versehen, die unterschiedliche Strömungswege aus einem Innenraum der Reckstange heraus in den Innenraum des Behälters hinein bereitstellen. Die Ausströmöffnungen dienen insbesondere zur Zuleitung eines Kühlgases, um eine Thermostabilisierung des Behälters nach einem Abschluß des Blasvorgangs durchzuführen.

Aus der US 5,182,122 A ist bereits eine hohle Reckstange bekannt, die einen koaxialen Aufbau mit zwei Strömungskanälen besitzt. Durch den inneren Kanal wird flüssiger Stickstoff und durch den äußeren Kanal warme Isolationsluft in den geblasenen Behälter eingeleitet. Eine Zufuhr von Blasluft erfolgt außenseitig entlang der Reckstange durch einen die Reckstange umgebenden Ringspalt hindurch. Anschlüsse für die warme Isolationsluft und den flüssigen Stickstoff sind an einem der Blasform abgewandten Ende der Reckstange angeordnet.

Aus der JP 54127970 A ist es bekannt, einen Vorformling unter Verwendung einer Reckstange zu formen, die mit Strömungswegen für ein unter Druck stehendes Gas versehen ist. Auch die US 2002/0171161 A1 zeigt eine solche Reckstange, wobei zur Einleitung des unter Druck stehenden Blasgases gleichzeitig teilweise eine Blasgaseinleitung durch die Reckstange hindurch und teilweise an der Reckstange vorbei erfolgt. Zur Kühlung eines Griffbereiches des geblasenen Behälters wird seitlich aus der Reckstange heraus Blasgas auf diesen Bereich geleitet.

Aus der JP-A-57117929 ist es bereits bekannt, eine Reckstange mit einer Heizeinrichtung auszustatten und den Blasvorgang unter Verwendung von heißem Blasgas durchzuführen Das Blasgas tritt über Öffnungen in der Seitenwandung der Reckstange aus.

Die bekannten Druckgaszuführungen können bislang noch nicht alle Anforderungen gemeinsam erfüllen, die bei ständig zunehmenden Produktionsraten gestellt werden. Die Druckgaszuführungen erfolgen gemäß dem Stand der Technik bislang derart, daß entweder das gesamte für die Expansion des Vorformlings benötigte Druckgas durch einen die Reckstange umgebenden Ringspalt oder bei der Verwendung von hohlen Reckstangen durch die Reckstange hindurch und aus einer Vielzahl entlang der Reckstange verteilter Austrittsöffnungen heraus erfolgt.

Aufgabe der vorliegenden Erfindung ist es, ein Verfahren der einleitend genannten Art derart anzugeben, daß eine verringerte Prozesszeit bei der Behälterformung erreicht wird.

Diese Aufgabe wird erfindungsgemäß durch ein Verfahren mit den Merkmalen des Anspruch 1 gelöst.

Weitere Aufgabe der vorliegenden Erfindung ist es, eine Vorrichtung der einleitend genannten Art derart zu konstruieren, daß eine gesteigerte Produktivität je verwendeter Blasstation erreicht werden kann.

Diese Aufgabe wird erfindungsgemäß durch eine Vorrichtung mit den Merkmalen des Anspruch 18 gelöst.

Durch die Verwendung des bis in die Nähe des Bodenbereiches des Behälters führenden Strömungsweges für das zur Blasverformung des Vorformlings in den Behälter verwendete Druckgas ist es möglich, im Hinblick auf die Umformung des thermoplastischen Materials optimierte Prozessbedingungen zu erreichen. Die in den Behälter einströmende Druckluft führt nicht nur zu einer Expansion des Vorformlings, sondern gleichzeitig erfolgt durch das am Material des Vorformlings sowie an der sich entwickelnden Behälterblase sowie später am ausgeformten Behälterboden vorbeiströmende Druckgas eine Abkühlung des Behältermaterials. Eine zeitliche Optimierung des Beginns der Kühlwirkung zur Vermeidung einer zu frühen Materialkühlung wird dadurch erreicht, daß das unter Druck stehende Gas bei einem Innendruck im Behälter von mindestens 10 bar gegen den Bodenbereich geleitet wird.

Eine große Kühlwirkung wird dadurch unterstützt, dass erfindungsgemäß mindestens 50 % der Menge des in den Behälter einströmenden Gases gegen den Bodenbereich geleitet wird.

Die Abkühlung des Behältermaterials ist in denjenigen Bereichen erwünscht, wo der Vorformling zumindest bereits näherungsweise die endgültige Gestaltung des Behälters angenommen hat. Unerwünscht ist eine Abkühlung des Behältermaterials jedoch in denjenigen Bereichen, in denen noch eine stärkere Verformung des Materials erforderlich ist. Durch die Verwendung von in die Blasform hineinführenden getrennten Strömungswegen ist es möglich, die Druckgaseinströmung in den Behälter derart zu steuern, daß eine zeitliche Optimierung der durch die Druckgaseinströmung erreichten Abkühlung des Behältermaterials bei gleichzeitig kurzer Füllzeit er-reicht wird.

Eine örtlich exakt definierte Druckgaszuführung wird auch dadurch unterstützt, daß das unter Druck stehende Gas durch die Reckstange hindurch geleitet wird.

Eine weitere Variante zur Unterstützung der Kühlwirkung besteht darin, daß eine Druckableitung mindestens teilweise durch die Reckstange hindurch erfolgt.

Eine weitere Verzögerung der Kühlwirkung kann dadurch erreicht werden, daß das unter Druck stehende Gas bei einem Innendruck im Behälter von mindestens 20 bar gegen den Bodenbereich geleitet wird. Insbesondere ist auch an einen Innendruck oberhalb von 30 bar gedacht.

Eine Vermeidung einer zu frühen Kühlung bei gleichzeitig rechtzeitigem Beginn der Kühlung wird dadurch erreicht, daß das unter Druck stehende Gas spätestens 1 Sekunde nach Beginn des Blasvorganges gegen den Bodenbereich geleitet wird.

Insbesondere ist daran gedacht, daß das unter Druck stehende Gas spätestens 0,5 Sekunden nach Beginn des Blasvorganges gegen den Bodenbereich geleitet wird.

Für einen Beginn der Kühlung hat es sich insbesondere auch als vorteilhaft erwiesen, daß das unter Druck stehende Gas spätestens 0,25 Sekunden nach Beginn des Blasvorganges gegen den Bodenbereich geleitet wird.

Eine weitere Steigerung der Kühlwirkung wird dadurch erreicht, daß mindestens 80 % der Menge des in den Behälter einströmenden Gases gegen den Bodenbereich geleitet wird.

Eine zielgerichtete Leitung der in den Behälter einströmenden Druckluft in den Bodenbereich des Behälters kann dadurch erfolgen, daß das unter Druck stehende Gas ausgehend von einem dem Bodenbereich zugewandten oberen Teil der Reckstange gegen den Bodenbereich strömt.

Insbesondere erweist es sich als vorteilhaft, daß das unter Druck stehende Gas höchstens 2,5 Zentimeter von einer Reckstangenkuppe entfernt aus der Reckstange ausströmt.

Eine weitere Steigerung der Kühlwirkung kann dadurch erreicht werden, daß das unter Druck stehende Gas höchstens 1,0 Zentimeter von einer Reckstangenkuppe entfernt aus der Reckstange ausströmt.

Eine Fortsetzung der Kühlwirkung auch nach Erreichen einer maximalen Füllung des Behälters mit Druckluft wird dadurch ermöglicht, daß spätestens nach Erreichen eines maximalen Druckniveaus innerhalb des Behälters eine teilweise Gasableitung aus dem Behälter heraus ohne wesentliche Absenkung des Druckniveaus durchgeführt wird.

Alternativ oder ergänzend zur Verwendung von unterschiedlichen Strömungswegen ist es auch möglich, daß die Strömungsrichtung des in den Behälter einströmenden Gases mindestens zeitweise verändert wird.

Eine zu frühe Kühlung des Bodenbereiches des Behälters kann dadurch vermieden werden, daß das unter Druck stehende Gas während einer ersten Prozeßphase mit einem Abstand zum Bodenbereich in den Behälter eingeleitet wird.

Eine prozeßtechnische Steuerung eines optimalen Beginns der Kühlwirkung wird dadurch unterstützt, daß das unter Druck stehende Gas erst während einer zweiten Prozeßphase gegen den Bodenbereich geleitet wird.

Ein optimierter Materialfluß wird dadurch erreicht, daß der fertig geblasene Behälter spätestens 1,5 Sekunden nach dem Einsetzen des Vorformlings in die Blasform aus der Blasform entnommen wird

Eine erhöhte mechanische Stabilität der Reckstange durch Vergrößerung des Stangendurchmessers kann dadurch erreicht werden, daß mindestens zwei Strömungswege durch die Reckstange hindurch verlaufen.

Eine typische Ausführungsform besteht darin, daß der Strömungsweg zur Zufuhr von Druckgas für die Behälterformung ausgebildet ist.

Insbesondere erweist es sich als zweckmäßig, daß mindestens zwei Strömungswege zur Zufuhr von unter Druck stehendem Gas mit unterschiedlichen Druckhöhen ausgebildet sind.

Ein verschleißarmer Anschluß des Reckstangeninnenraumes an die bereitgestellten Versorgungskanäle kann dadurch erfolgen, daß die Reckstange einen von Seitenwandungen umschlossenen Innenraum aufweist und daß der Innenraum durch eine Mehrzahl von Ausnehmungen in der Wandung an eine Druckgasversorgung angeschlossen ist.

Eine gesteuerte Vorgabe der jeweiligen Strömungswege sowie der Strömungszeiten kann dadurch erfolgen, daß im Bereich jedes Strömungsweges mindestens ein Stellelement zur Realisierung einer Ventilfunktion angeordnet ist.

Eine zeitlich veränderliche Kühlwirkung während des Prozeßablaufes kann dadurch erreicht werden, daß eine Steigung mindestens eines Teiles des Strömungsweges relativ zu einer Längsachse der Reckstange veränderlich ist.

Eine andere Maßnahme zur Erreichung einer zeitlich veränderlichen Kühlwirkung besteht darin, daß mindestens ein Teil des Strömungsweges mindestens teilweise verschließbar ausgebildet ist.

Eine optimale Ausrichtung der Strömung des Druckgases wird dadurch erreicht, daß der Strömungsweg im Bereich seines Austritts aus der Reckstange schräg zur Längsachse der Reckstange verläuft.

Insbesondere ist daran gedacht, daß ein in Richtung auf den Behälterboden zwischen der Längsachse der Reckstange und einer Längsachse des Strömungsweges gemessener Winkel einen Wert im Bereich von 20 ° bis 80 ° aufweist.

Eine besonders hohe Kühlwirkung wird dadurch erreicht, daß im Bereich der Reckstangenkuppe eine Mehrzahl von düsenartigen Ausströmöffnungen für das unter Druck stehende Gas angeordnet sind.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine Seitenansicht einer Blasstation, bei der eine Reckstange von einem Reckstangenträger positioniert wird,
- Fig. 6: eine vergrößerte und teilweise geschnittene Darstellung eines oberen Bereiches der Reckstangenführung der Reckstange,
- Fig. 7: eine vergrößerte Darstellung der Einzelheit VII in Fig. 6,
- Fig. 8: eine vergrößerte Darstellung der Einzelheit VIII in Fig. 6,
- Fig. 9: eine gegenüber Fig. 2 stärker detaillierte Darstellung eines Längsschnittes durch die Blasstation zur Veranschaulichung von zwei unterschiedlichen Strömungswegen für das Druckgas,
- Fig. 10: ein Blockschaltbild zur Veranschaulichung der Druckluftversorgung der Blasstation,
- Fig. 11: eine teilweise Darstellung einer Reckstange, die im Bereich einer Reckstangenkuppe mit einer Mehrzahl von Ausströmöffnungen versehen ist und
- Fig. 12: ein Diagramm zur Gegenüberstellung eines konventionellen Blasdruckverlaufes sowie eines Blasdruckverlaufes bei zusätzlicher Kühlung des Bodenbereiches durch die in den Behälter einströmende Blasluft.

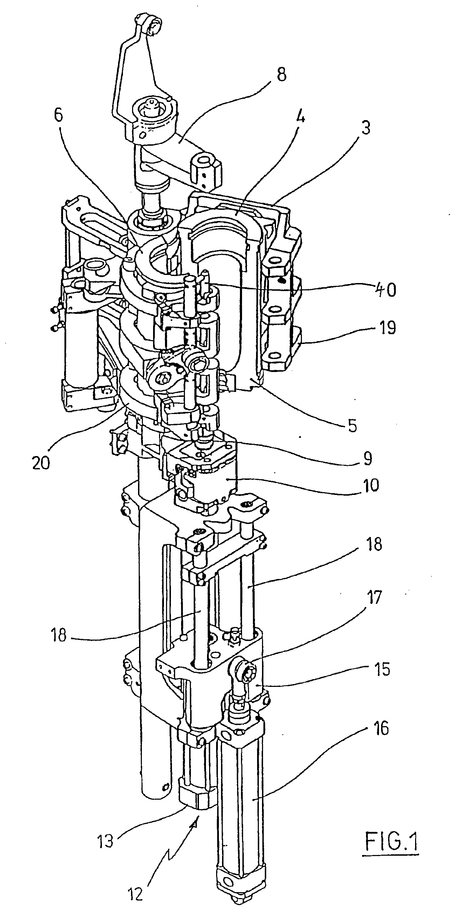

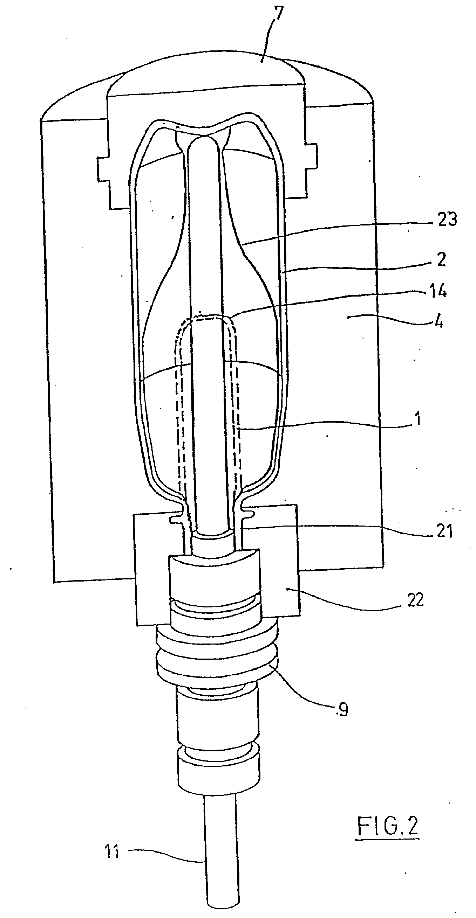

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

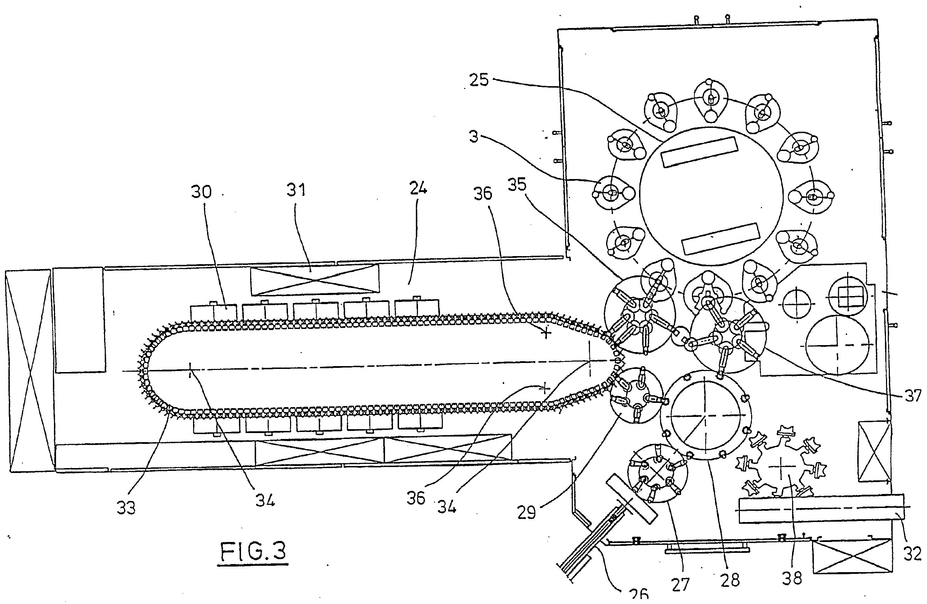

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

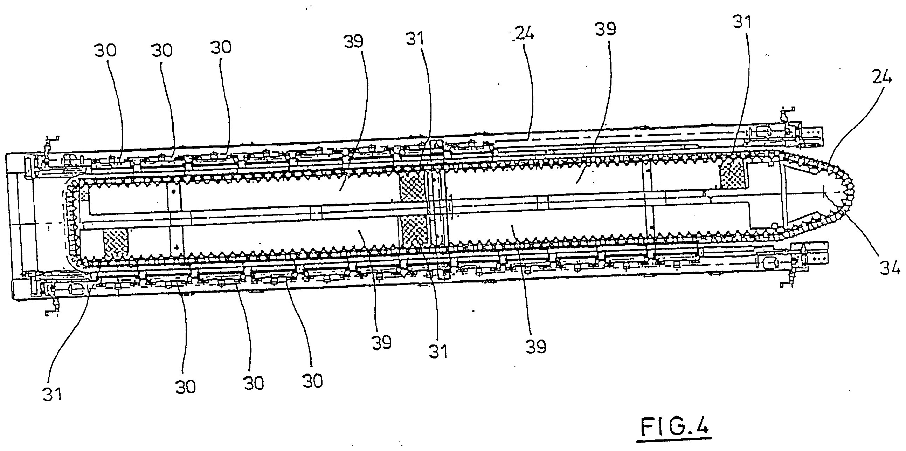

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

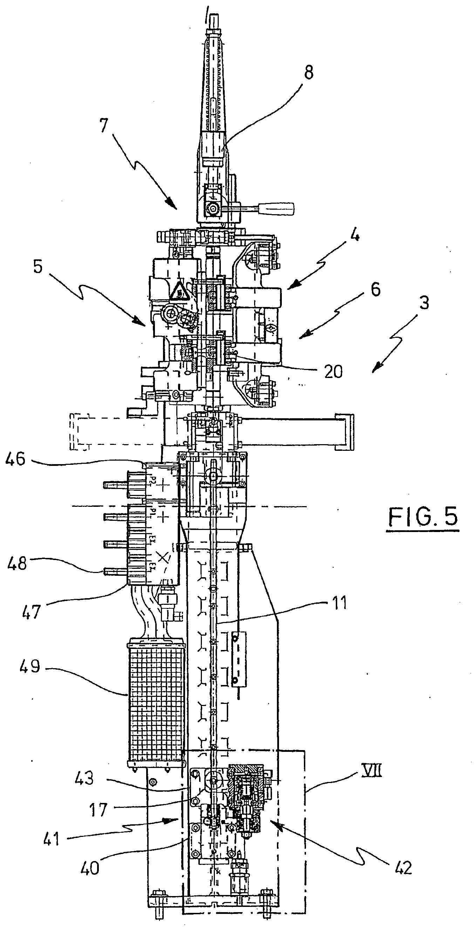

Fig. 5 zeigt eine gegenüber der Darstellung in Fig. 1 abgewandelte Darstellung der Blasstation (3) bei einer Blickrichtung von vorne. Insbesondere ist aus dieser Darstellung erkennbar, daß die Reckstange (11) von einem Reckstangenträger (41) gehaltert ist, der aus einem Trägersockel (40) und einem über ein Kupplungselement (42) mit dem Trägersockel (40) verbundenen Rollenträger (43) ausgebildet ist. Der Rollenträger (43) haltert die Führungsrolle (17), die zur Positionierung des Recksystems dient. Die Führungsrolle (17) wird entlang einer nicht dargestellten Kurvenbahn geführt. Es ist hier eine vollständige mechanische Steuerung des Reckvorganges realisiert.

Das in Fig. 5 veranschaulichte Kupplungselement (42) kann auch bei der Ausführungsform gemäß Fig. 1 zur Ermöglichung einer vollständigen mechanischen Entkopplung der Zylinder (12) voneinander bzw. von einem Tragelement für die Führungsrolle (17) eingesetzt werden.

Fig. 5 veranschaulicht einen eingerasteten Zustand des Kupplungselementes (42), in dem der Trägersockel (40) und der Rollenträger (43) miteinander durch das Kupplungselement (42) verbunden sind. Es liegt hierdurch eine starre mechanische Kopplung vor, die dazu führt, daß eine Positionierung der Führungsrolle (17) direkt und unmittelbar in eine Positionierung der Reckstange (11) umgesetzt wird. Es liegt hierdurch in jedem Bewegungszustand des Blasrades (25) eine exakt vorgegebene Positionierung der Reckstange (11) vor und die Positionierung der Reckstange (11) wird bei einer Mehrzahl von auf dem Blasrad (25) angeordneten Blasstationen (3) bei jeder Blasstation (3) exakt reproduziert. Diese exakte mechanische Vorgabe der Positionierung der Reckstange (11) trägt zu einer hohen Produktqualität sowie zu einer hohen Gleichmäßigkeit der hergestellten Behälter (2) bei.

Fig. 5 zeigt ebenfalls die Anordnung eines Pneumatikblockes (46) zur Blasdruckversorgung der Blasstation (3). Der Pneumatikblock (46) ist mit Hochdruckventilen (47) ausgestattet, die über Anschlüsse (48) an eine oder mehrere Druckversorgungen angeschlossen werden können. Nach einer Blasformung der Behälter (2) wird in eine Umgebung abzuleitende Blasluft wird über den Pneumatikblock (46) zunächst einem Schalldämpfer (49) zugeführt.

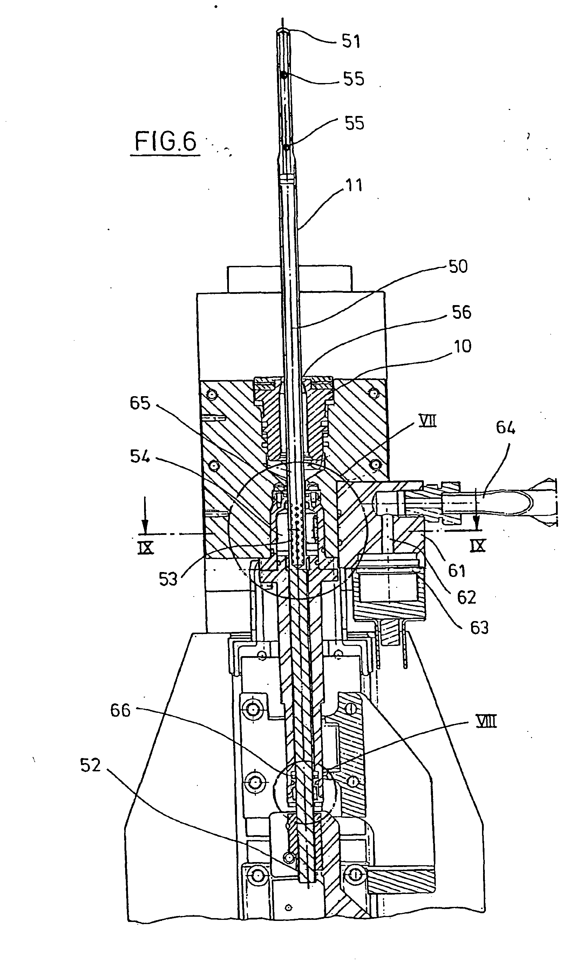

Fig. 6 veranschaulicht, daß die Reckstange (11) mit einem Stangeninnenraum (50) versehen ist, in den Durchgangsöffnungen (53) einmünden, die in einem zwischen einer Reckstangenkuppe (51) und einem der Reckstangenkuppe (51) abgewandt angeordneten Reckstangenende (52) positioniert sind. Bei der in Fig. 6 veranschaulichten Positionierung der Reckstange (10) stellen die Durchgangsöffnungen (53) eine Verbindung zwischen dem Stangeninnenraum (50) und einer Druckkammer (54) her.

Im Bereich eines der Reckstangenkuppe (51) zugewandten Bereiches der Reckstange (11) sind Ausströmöffnungen (55) positioniert. Bei dem in Fig. 6 dargestellten Ausführungsbeispiel erstreckt sich im Bereich des Anschlußkolbens (10) um die Reckstange (11) herum ein Ringspalt (56), so daß bei dieser Ausführungsform eine Druckgaszuführung sowohl durch den Stangeninnenraum (50) als auch durch den Ringspalt (56) hindurch erfolgen kann.

Im Bereich eines Ventilblockes (61) ist ein Zufuhrkanal angeordnet, der ein Steuerventil (63) mit einer Gaszuführung (64) verbindet. Über das Steuerventil (63) wird die Gaszufuhr zur Druckkammer (54) gesteuert.

Eine Abdichtung der Reckstange (11) hinsichtlich einer Umgebung erfolgt über Stangendichtungen (65, 66). Innerhalb des von den Stangendichtungen (65, 66) begrenzten Druckraumes ist eine abgedichtete Führung des mit den Durchgangsöffnungen (53) versehenen Bereiches der Reckstange (11) möglich.

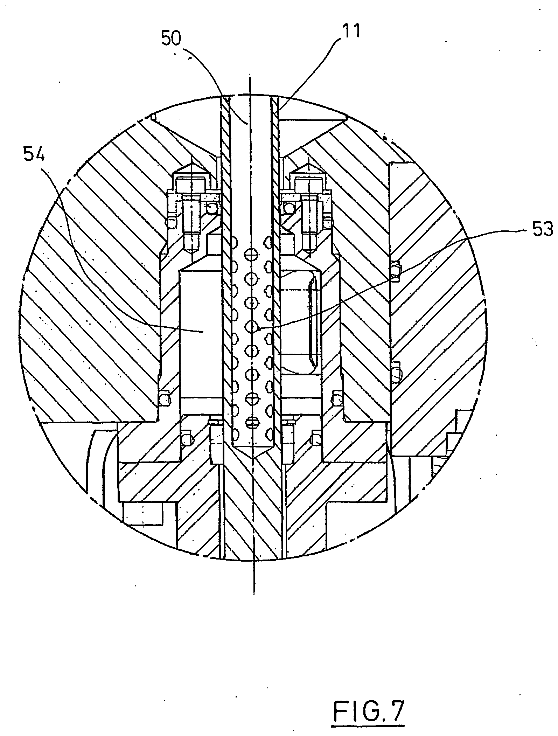

Aus Fig. 7 ist der Aufbau der Reckstange (11) im Bereich der Durchgangsöffnungen (53) sowie die konstruktive Gestaltung der Druckkammer (54) in einer vergrößerten Darstellung zu erkennen. Die Durchgangsöffnungen (53) sind beim dargestellten Ausführungsbeispiel in Richtung einer Längsachse (57) der Reckstange (11) reihenartig hintereinander angeordnet. Mehrere derartige Reihen sind entlang des Umfanges der Reckstange (11) relativ zueinander mit einem Abstand angeordnet. Insbesondere ist daran gedacht, die gebildeten Reihen in Richtung der Längsachse (57) derart relativ zueinender versetzt anzuordnen, daß ein Versatz um die Hälfte eines Mittellinienabstandes der Durchgangsöffnungen (53) vorliegt. Hierdurch werden die Durchgangsöffnungen (53) einer Reihe von Durchgangsöffnungen (53) jeweils im Schwerpunkt von rechteckförmigen Bezugsflächen angeordnet, die von jeweils zwei Durchgangsöffnungen (53) benachbarter Reihen aufgespannt werden. Diese Anordnung unterstützt eine gleichmäßige Strömung.

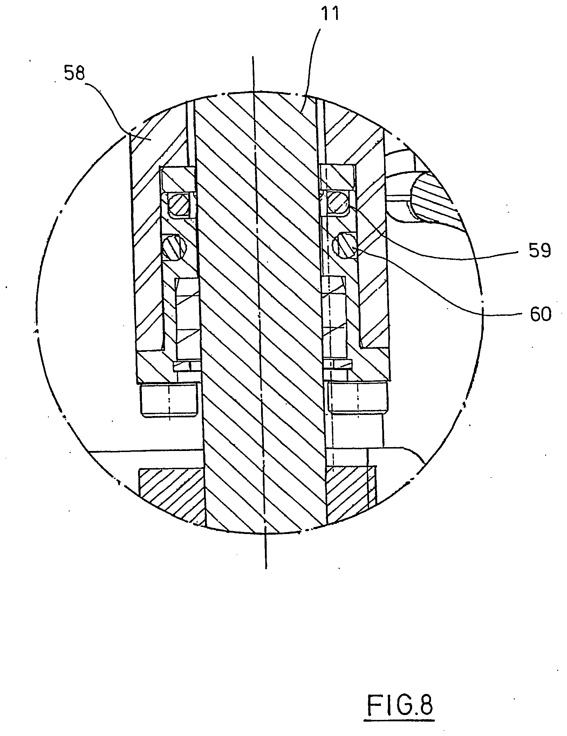

Aus der vergrößerten Darstellung in Fig. 8 ist die abgedichtete Führung der Reckstange (11) im Bereich eines Trägers (58) zu erkennen. Es werden hierzu Dichtungen (59, 60) verwendet, wobei die Dichtung (59) als Stangendichtung und die Dichtung (60) als O-Ring ausgebildet sein kann. Eine Stangendichtung besteht aus einem harten Ring und einen O-Ring aus Weichmetall.

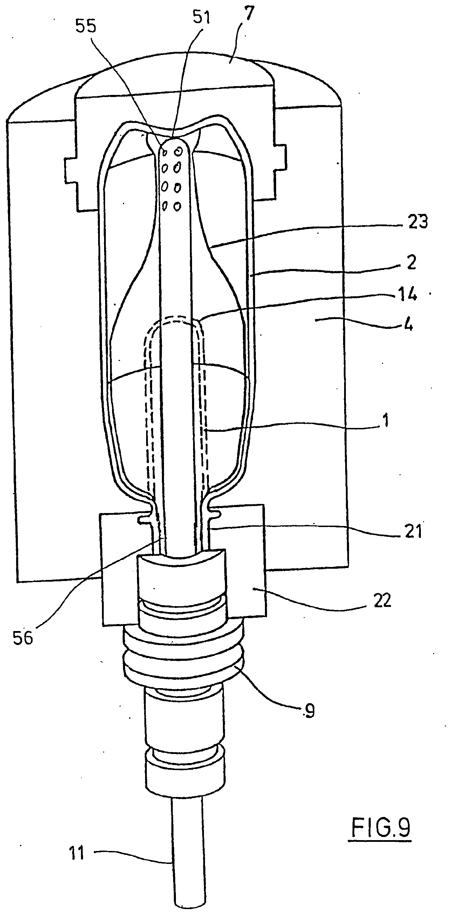

Fig. 9 veranschaulicht nochmals die Anordnung der Ausströmöffnungen (55) der Reckstange (11) in einem der Reckstangenkuppe (51) zugewandten Bereich der Reckstange (11) sowie die Anordnung des Ringspaltes (56) im Bereich des Mündungsabschnittes (21). Durch diese Anordnung ist es insbesondere möglich, zu Beginn des Blasformungsvorganges durch den Ringspalt (56) Druckluft in den Vorformling (1) bzw. die sich entwickelnde Behälterblase (23) einzuleiten und anschließend die Druckgaseinleitung durch die Ausströmöffnungen (55) der Reckstange (11) hindurch fortzusetzen. Die Anordnung der Ausströmöffnungen (55) erfolgt vorzugsweise in einem sich an die Reckstangenkuppe (51) anschließenden Bereich der Reckstange (11) mit einer Bereichsausdehnung von etwa 10 cm in Richtung der Längsachse (57). Bevorzugt ist ein Bereich von höchstens 2,5 cm, besonders bevorzugt ein Bereich von höchstens 1 cm.

Fig. 9 veranschaulicht, daß bei einer typischen Behälterblase (23) diese sich bereits in einem relativ frühen Formungszustand in einer Umgebung des Mündungsabschnittes (21) der Blasform (4) nähert bzw. bereits an der Blasform (4) anliegt. In Abhängigkeit von der Geometrie des jeweils blaszuformenden Behälters (2) kann im Anschluß an die Druckgaszuführung nur über den Ringspalt (56) die weitere Druckgaseinleitung allein über die Ausströmöffnungen (55) der Reckstange (11) erfolgen, es ist aber auch möglich, zumindest zeitweilig das Druckgas sowohl über den Ringspalt (56) als auch über die Ausströmöffnungen (55) zuzuführen.

Eine Druckgaszuführung gleichzeitig über die Ausströmöffnungen (55) und den Ringspalt (56) ermöglicht aufgrund der Parallelschaltung der Strömungswege eine Druckgaszuführung mit geringerem Strömungswiderstand und somit geringerem Zeitbedarf. Eine Druckgaszuführung im zweiten zeitlichen Abschnitt der Blasverformung allein über die Ausströmöffnung (55) unterstützt eine Kühlung im Bereich des Bodens des Behälters (2), der prozeßbedingt wesentlich dicker als die Seitenwände des Behälters (2) ausgebildet wird und hierdurch stärker gekühlt werden muß, um eine ausreichende Materialstabilität zu erreichen.

Grundsätzlich ist es somit möglich, zunächst das Druckgas ausschließlich über den ersten Strömungsweg und anschließend über den zweiten Strömungsweg zuzuführen, es ist aber auch möglich, während der zweiten Phase der Blasverformung die Druckgaszuführung über beide Strömungswege vorzunehmen oder zunächst eine Zwischenphase mit gleichzeitiger Druckgaszuführung durch beide Strömungswege und anschließend eine Umformungsphase mit ausschließlicher Druckgaszuführung über den zweiten Strömungsweg durchzuführen.

Gemäß einer bevorzugten Verfahrensvariante wird über den ersten Strömungsweg Druck eines niedrigeren Druckniveaus, beispielsweise mit einem Druck im Bereich von 5 bis 20 bar, und im Bereich des zweiten Strömungsweges Druckgas eines höheren Druckniveaus, beispielsweise mit einem Druck von etwa 40 bar zugeführt. Der niedrigere Druck kann aus dem höheren Druck über einen Druckwandler abgeleitet werden. Prinzipiell ist es auch möglich, die Querschnittgestaltung des ersten Strömungsweges derart zu gestalten, daß auch der erste Strömungsweg an den höheren Druck angeschlossen wird und der bereitgestellte Strömungswiderstand die beabsichtigte Druckreduzierung verursacht.

Alternativ zu der in Fig. 9 dargestellten Anordnung des ersten Strömungsweges als die Reckstange (11) umgebender Ringspalt (56) ist es auch möglich, die Reckstange (11) mit einem größeren Durchmesser zu versehen und im Inneren der Reckstange (11) die getrennten Strömungswege anzuordnen. Die Reckstange würde hierzu vorteilhafter Weise bei der in Fig. 9 dargestellten Positionierung oberhalb des Mündungsabschnittes (21) mit Ausströmöffnungen versehen werden, die in den ersten Strömungsweg einmünden. Die in Fig. 9 dargestellten Ausführungsform weist aber den Vorteil auf, daß nur ein relativ kleiner Anteil der Querschnittfläche des Mündungsabschnittes (21) vom Wandungsmaterial der Reckstange (11) ausgefüllt ist und hierdurch der vergleichsweise große Rest der Querschnittfläche für die beiden Strömungswege zur Verfügung steht.

Alternativ oder ergänzend zur Zuführung von Druckgas mit unterschiedlichen Druckhöhen über die beiden Strömungswege ist es auch möglich, eine Zuführung von Druckgas mit unterschiedlichen Temperaturen vorzunehmen. Insbesondere ist daran gedacht, während einer ersten Prozeßphase Druckgas einer höheren Temperatur als während einer zweiten Prozeßphase zuzuführen.

Eine Kühlwirkung während der zweiten Prozeßphase kann durch eine geeignete Gestaltung der Strömungswege sowie der Ausströmöffnungen (55) unterstützt werden. Als besonders vorteilhaft erweist es sich, daß die geometrische Gestaltung der Strömungswege derart gewählt wird, daß während der Druckgasströmung durch die Reckstange hindurch im Stangen-innenraum (50) ein möglichst hohes Druckniveau beibehalten wird und sich entlang der Ausströmöffnungen (55) ein großer Druckgradient einstellt. Es erfolgt hierdurch eine Gasexpansion in den Behälter hinein örtlich dicht am Boden des Behälters (2), so daß die Expansionskälte zusätzlich zu einer Kühlung des Behälterbodens genutzt werden kann.

Vor einem Ablassen des Druckgases aus dem Innenraum des Behälters (2) ist es möglich, zunächst die Reckstange (11) vollständig aus dem Innenraum der Blasform (4) zurückzuziehen und hierdurch die gesamte Querschnittfläche des Mündungsabschnittes (21) für das ausströmende Gas zur Verfügung zu stellen. Hierdurch wird eine schnelle Druckabsenkung unterstützt, die zu einer Abkühlung des innerhalb des Behälters (2) befindlichen Gases und hierdurch zu einer zusätzlichen Kühlung des Wandungsmaterials des Behälters (2) führt.

Alternativ ist es aber ebenfalls denkbar, die Reckstange wenigstens während eines Teiles der für die Druckgasableitung erforderlichen Zeitspanne in der in Fig. 9 dargestellten Positionierung oder in einer geringfügig abgesenkten Positionierung zu belassen und zumindest einen Teil des Druckgases durch die Ausströmöffnungen (55) in den Innenraum der Reckstange (11) zurückzuleiten. Hierdurch wird innerhalb des Behälters (2) bei der Druckgasableitung eine Gasströmung in Richtung auf den Boden des Behälters (2) erzeugt und ein zusätzlicher Kühleffekt erreicht. Die jeweils optimale Verfahrensvariante wird auch hier in Abhängigkeit von der konkret vorliegenden Geometrie des Behälters (2) gewählt.

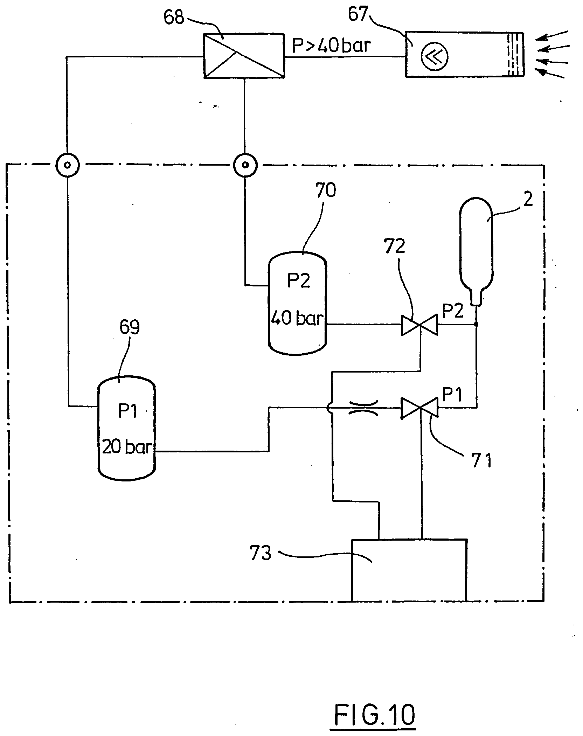

Fig. 10 zeigt schematisch ein Blockschaltbild der Druckgasversorgung. Der eingezeichnete Behälter (2) wurde gleichzeitig auch stellvertretend für den Vorformling (1) sowie die Behälterblase (23) abgebildet. Über einen Kompressor (67) wird Druck eines Ausgangsdruckniveaus, beispielsweise oberhalb von 40 bar bereitgestellt. Über einen oder mehrere Druckwandler (68) erfolgt beim dargestellten Ausführungsbeispiel eine Druckabsenkung auf zwei unterschiedliche Versorgungsdruckniveaus. Das höhere Druckniveau beträgt hier etwa 40 bar, das niedrigere Druckniveau etwa 20 bar.

Über Kessel (69, 70) wird ein Vorratsvolumen für die jeweiligen Drücke bereitgestellt, so daß auch bei einer getakteten Druckentnahme das jeweilige Druckniveau zumindest näherungsweise aufrecht erhalten bleibt. Die gesteuerte Druckgaszuführung erfolgt unter Verwendung von Ventilen (71, 72). Die Ventile (71, 72) sind an eine Steuerung (73) angeschlossen, die die jeweiligen Schaltzeiten der Ventile (71, 72) koordiniert.

Eine weitere Ausführungsvariante besteht darin, daß nicht zwei getrennte Strömungswege verwendet werden, sondern daß der Verlauf des Strömungsweges veränderlich ist. Die Veränderung des Verlaufes kann beispielsweise in Abhängigkeit vom einwirkenden Druck oder mechanisch erfolgen. Die Veränderungen können sich dabei sowohl auf eine Veränderung der Ausrichtung der Strömungswege als auch auf ein Öffnen oder Schließen von Ausströmöffnungen (35) beziehen.

Gemäß einem Ausführungsbeispiel ist es möglich, die Reckstange (11) sowohl mit einem Abstand zur Reckstangenkuppe (51) als auch im Bereich der Reckstangenkuppe (51) mit Ausströmöffnungen (55) zu versehen. Während einer ersten Prozeßphase sind die Ausströmöffnungen (55) im Bereich der Reckstangenkuppe (51) und während einer zweiten nachfolgenden Prozeßphase die zur Reckstangenkuppe (51) beabstandet angeordneten Ausströmöffnungen (55) verschlossen. Die Steuerung kann hier beispielsweise durch verschiebliche Elemente erfolgen, die druckabhängig oder als Folge einer mechanischen Betätigung positioniert werden.

Nach einer vollständigen Füllung des Behälters (2) mit der zur Behälterformung erforderlichen Druckluft endet grundsätzlich die Kühlwirkung, da kein weiteres Gas in den Bereich des Behälterbodens geleitet wird. Eine zusätzliche Kühlwirkung kann unter Berücksichtigung dieses grundsätzlichen Prozeßablaufes dadurch erreicht werden, daß eine bewußt erzeugte Leckage verwendet wird. Die Leckage wird hierbei vorzugsweise derart vorgegeben, daß ohne nennenswerte Senkung des Druckes innerhalb des Behälters (2) Druckgas aus dem Behälter (2) abgeleitet wird und durch die Reckstange (11) zusätzliches Druckgas in den Behälter (2) nachströmen kann. Die Druckgasableitung erfolgt hierbei bevorzugt mit einem Abstand zum Behälterboden. Die Leckage kann beispielsweise durch getaktetes kurzzeitiges Öffnen des üblichen Ablaßventils erzeugt werden, ebenfalls ist die Verwendung eines zusätzlichen Leckageventils mit geringem Strömungsquerschnitt oder die Anordnung einer gering dimensionierten Leckageöffnung oder eines Leckagespaltes möglich.

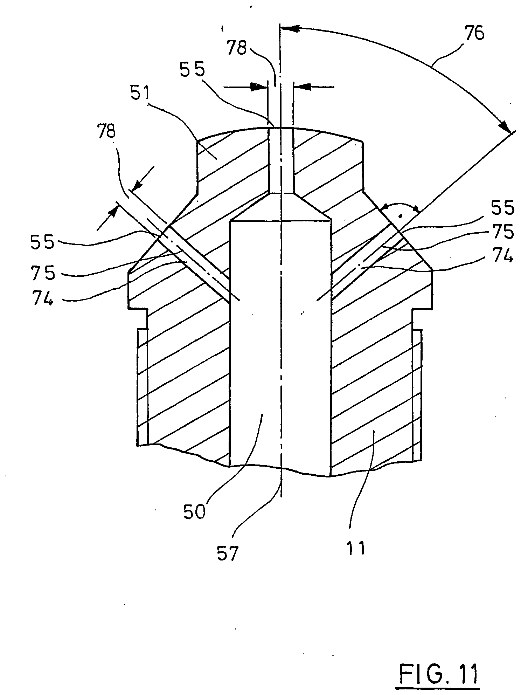

Fig. 11 zeigt die Anordnung einer Mehrzahl von Ausströmkanälen (74) im Bereich der Reckstangenkuppe (51), die in den Innenraum (50) der Reckstange (11) einmünden. Insbesondere ist daran gedacht, die Ausströmkanäle (74) als Düsenkranz entlang eines Umfanges der Reckstangenkuppe (51) zu positionieren. Längsachsen (75) der Ausströmkanäle (74) weisen einen Neigungswinkel (76) relativ zu einer Längsachse (57) der Reckstange (11) auf. Der Neigungswinkel (76) liegt vorzugsweise im Bereich von 20 ° bis 80 °. Bei dem in Fig. 11 dargestellten Ausführungsbeispiel erstreckt sich ein zusätzlicher Ausströmkanal (77) in Richtung der Reckstangenlängsachse (57). Durchmesser (78) der Ausströmkanäle (74, 77) liegen typischerweise in einem Bereich von 1 bis 6 mm. Bei der dargestellten Ausführungsform kann die Reckstangenkuppe (51) in ein rohrförmiges Grundelement der Reckstange (11) eingeschraubt werden.

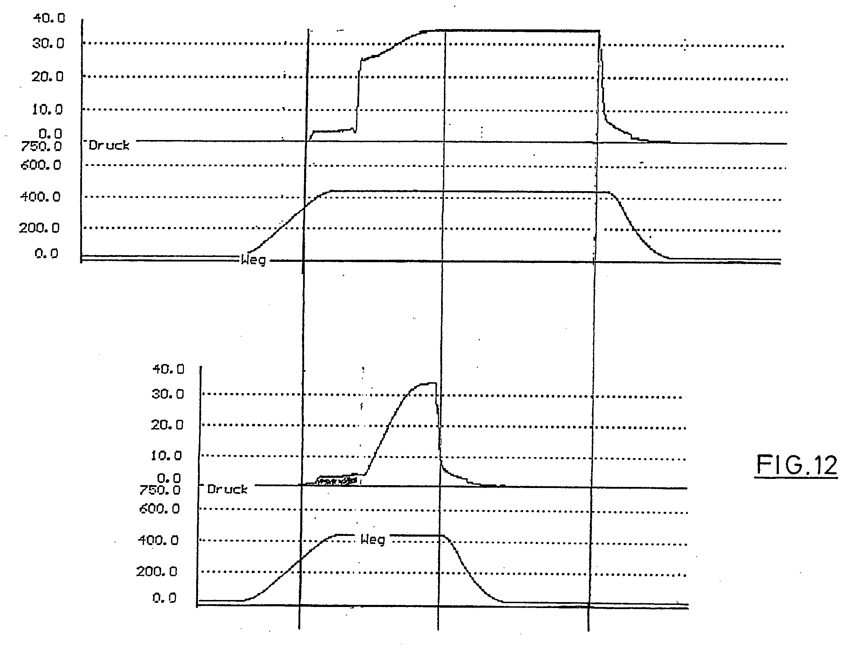

Fig. 12 veranschaulicht die durch die Kühlung des Bodenbereiches zu erreichende wesentliche Verkürzung der Prozeßzeit. Bei dem in Fig. 12 im oberen Teil dargestellten konventionellen Prozeßverlauf beträgt die Vorblasphase mit einem ersten Blasdruck ca. 0,3 bis 0,4 Sekunden, die Hauptblasphase mit einem Druck zwischen 30 und 40 bar beträgt ca. 1,5 Sekunden und für die Blasdruckabsenkung sowie die Entnahme des geblasenen Behälters (2) aus der Blasform fallen weitere 0,5 Sekunden an. Die Gesamtprozeßdauer beträgt somit etwa 2,5 Sekunden. Bei dem in Fig. 12 unten dargestellten Blasdruckverlauf verkürzt sich bei im wesentlichen gleichlangen Zeitdauern für die vorblasphase sowie die Nachblasphase die Zeitdauer für die Einleitung des hohen Blasdruckes auf etwa 0,5 Sekunden, so daß die gesamte Prozeßdauer etwa 1,3 Sekunden umfaßt. Es kann somit nahezu eine Halbierung der erforderlichen Prozeßzeit erreicht werden.

Alternativ zur dargestellten Zuführung eines ersten Blasdruckes mit einem relativ geringen Druck und eines zweiten höheren Blasdruckes ist es auch denkbar, lediglich einen einheitlichen Blasdruck zuzuführen und den sich ergebenden Druckaufbau innerhalb des Behälters durch die Dimensionierung der Strömungswege zu beeinflussen. Bei einer derartigen Verfahrensweise sind insbesondere die zeitlich veränderlichen Strömungswege vorteilhaft, um eine Prozeßoptimierung zu erreichen.

## Patentansprüche

1. Verfahren zur Blasformung von Behältern (2), bei dem ein Vorformling (1) nach einer thermischen Konditionierung innerhalb einer Blasform (4) von einer Reckstange (11) gereckt und durch Blasdruckeinwirkung in den Behälter (2) umgeformt wird und bei dem unter Druck stehendes Gas durch die Reckstange (11) hindurch in den Behälter (2) eingeleitet wird, wobei mindestens ein Teil des unter Druck stehenden Gases zur Blasformung durch die Reckstange (11) hindurch gegen einen Bodenbereich des Behälters (2) geleitet wird, **dadurch gekennzeichnet, dass** das unter Druck stehende Gas erst bei einem Innendruck im Behälter (2) von mindestens 10 bar gegen den Bodenbereich geleitet wird, wobei mindestens 50 % der Menge des in den Behälter (2) einströmenden Gases gegen den Bodenbereich geleitet wird, nämlich mindestens 50% des für die Umformung des Vorformlings in den Behälter insgesamt benötigten Druckgases.

2. Verfahren nach Anspruch 1, **dadurch gekennzeichnet, daß** das unter Druck stehende Gas wenigstens zeitweise über zwei unterschiedliche Strömungswege zugeführt wird.

3. Verfahren nach Anspruch 1 oder 2, **dadurch gekennzeichnet, daß** das unter Druck stehende Gas durch die Reckstange (11) hindurch geleitet wird.

4. Verfahren nach einem der Ansprüche 1 bis 3, **dadurch gekennzeichnet, daß** eine Druckableitung mindestens teilweise durch die Reckstange (11) hindurch erfolgt.

5. Verfahren nach einem der Ansprüche 1 bis 4, **dadurch gekennzeichnet, daß** das unter Druck stehende Gas bei einem Innendruck im Behälter (2) von mindestens 20 bar gegen den Bodenbereich geleitet wird.

6. Verfahren nach einem der Ansprüche 1 bis 5, **dadurch gekennzeichnet, daß** das unter Druck stehende Gas spätestens 1 Sekunde nach Beginn des Blasvorganges gegen den Bodenbereich geleitet wird.

7. Verfahren nach einem der Ansprüche 1 bis 5, **dadurch gekennzeichnet, daß** das unter Druck stehende Gas spätestens 0,5 Sekunden nach Beginn des Blasvorganges gegen den Bodenbereich geleitet wird.

8. Verfahren nach einem der Ansprüche 1 bis 5, **dadurch gekennzeichnet, daß** das unter Druck stehende Gas spätestens 0,25 Sekunden nach Beginn des Blasvorganges gegen den Bodenbereich geleitet wird.

9. Verfahren nach einem der Ansprüche 1 bis 8, **dadurch gekennzeichnet, daß** mindestens 80 % der Menge des in den Behälter (2) einströmenden Gases gegen den Bodenbereich geleitet wird.

10. Verfahren nach einem der Ansprüche 1 bis 9, **dadurch gekennzeichnet, daß** das unter Druck stehende Gas ausgehend von einem dem Bodenbereich zugewandten oberen Teil der Reckstange (11) gegen den Bodenbereich strömt.

11. Verfahren nach Anspruch 4410, **dadurch gekennzeichnet, daß** das unter Druck stehende Gas höchstens 2,5 Zentimeter von einer Reckstangenkuppe (51) entfernt aus der Reckstange (11) ausströmt.

12. Verfahren nach Anspruch 4410, **dadurch gekennzeichnet, daß** das unter Druck stehende Gas höchstens 1,0 Zentimeter von einer Reckstangenkuppe (51) entfernt aus der Reckstange (11) ausströmt.

13. Verfahren nach einem der Ansprüche 1 bis 12, **dadurch gekennzeichnet, daß** spätestens nach Erreichen eines maximalen Druckniveaus innerhalb des Behälters (2) eine teilweise Gasableitung aus dem Behälter (2) heraus ohne wesentliche Absenkung des Druckniveaus durchgeführt wird.

14. Verfahren nach einem der Ansprüche 1 bis 4413, **dadurch gekennzeichnet, daß** die Strömungsrichtung des in den Behälter (2) einströmenden Gases mindestens zeitweise verändert wird.

15. Verfahren nach einem der Ansprüche 1 bis 14, **dadurch gekennzeichnet, daß** das unter Druck stehende Gas während einer ersten Prozeßphase des Blasvorgangs mit einem Abstand zum Bodenbereich in den Behälter (2) eingeleitet wird.

16. Verfahren nach einem der Ansprüche 1 bis 15, **dadurch gekennzeichnet, daß** das unter Druck stehende Gas erst während einer zweiten Prozeßphase gegen den Bodenbereich geleitet wird.

17. Verfahren nach einem der Ansprüche 1 bis 16, **dadurch gekennzeichnet, daß** der fertig geblasene Behälter (2) spätestens 1,5 Sekunden nach dem Einsetzen des Vorformlings (1) in die Blasform aus der Blasform entnommen wird.

18. Vorrichtung zur Blasformung von Behältern (2), die mindestens eine Blasstation (3) mit mindestens einer Blasform (4) sowie mindestens einer Reckstange (11) aufweist sowie bei der die Reckstange (11) an eine Versorgungseinrichtung zur Zufuhr von unter Druck stehendem Gas angeschlossen ist, wobei die Reckstange (11) mindestens einen bis in den Bereich einer Reckstangenkuppe (51) hinführenden Strömungsweg für das unter Druck stehende Gas zur Blasformung aufweist, um das Blasgas durch die Reckstange (11) hindurch gegen einen Bodenbereich des Behälters (2) zu leiten, wobei die Vorrichtung ausgebildet ist, dass mindestens ein Teil des unter Druck stehenden Gases zur Blasformung durch die Reckstange (11) hindurch gegen einen Bodenbereich des Behälters (2) geleitet wird, **dadurch gekennzeichnet, daß** das unter Druck stehende Gas erst bei einem Innendruck im Behälter (2) von mindestens 10 bar gegen den Bodenbereich geleitet wird, wobei mindestens 50 % der Menge des in den Behälter (2) einströmenden Gases gegen den Bodenbereich geleitet wird, nämlich mindestens 50% des für die Umformung des Vorformlings in den Behälter insgesamt benötigten Druckgases.

19. Vorrichtung nach Anspruch 18, **dadurch gekennzeichnet, daß** mindestens zwei Strömungswege durch die Reckstange (11) hindurch verlaufen.

20. Vorrichtung nach einem der Ansprüche 18 oder 19, **dadurch gekennzeichnet, daß** der Strömungsweg zur Zufuhr von Druckgas für die Behälterformung ausgebildet ist.

21. Vorrichtung nach einem der Ansprüche 18 bis 20, **dadurch gekennzeichnet, daß** mindestens zwei Strömungswege zur Zufuhr von unter Druck stehendem Gas mit unterschiedlichen Druckhöhen ausgebildet sind.

22. Vorrichtung nach einem der Ansprüche 18 bis 21, **dadurch gekennzeichnet, daß** die Reckstange (11) einen von Seitenwandungen umschlossenen Innenraum (50) aufweist und daß der Innenraum (50) durch eine Mehrzahl von Ausnehmungen in der Wandung an eine Druckgasversorgung angeschlossen ist.

23. Vorrichtung nach einem der Ansprüche 18 bis 22, **dadurch gekennzeichnet, daß** im Bereich jedes Strömungsweges mindestens ein Stellelement zur Realisierung einer Ventilfunktion angeordnet ist.

24. Vorrichtung nach einem der Ansprüche 18 bis 2423, **dadurch gekennzeichnet, daß** der Bereich der Reckstangenkuppe (51) ausgehend von einem Ende der Reckstange (11) eine Längendimensionierung von höchstens 2,5 Zentimeter aufweist.

25. Vorrichtung nach einem der Ansprüche 18 bis 2423, **dadurch gekennzeichnet, daß** der Bereich der Reckstangenkuppe (51) ausgehend von einem Ende der Reckstange (11) eine Längendimensionierung von höchstens 1,0 Zentimeter aufweist.

26. Vorrichtung nach einem der Ansprüche 18 bis 25, **dadurch gekennzeichnet, daß** die Blasstation (3) ein Leckageventil zur Vorgabe einer definierten Leckageströmung aus dem Behälter (2) heraus aufweist.

27. Vorrichtung nach einem der Ansprüche 18 bis 26, **dadurch gekennzeichnet, daß** der durch die Reckstange (11) hindurch verlaufende Strömungsweg mindestens bereichsweise geometrisch veränderlich ausgebildet ist.

28. Vorrichtung nach Anspruch 2827, **dadurch gekennzeichnet, daß** mindestens ein Teil des Strömungsweges mindestens teilweise verschließbar ausgebildet ist.

29. Vorrichtung nach einem der Ansprüche 18 bis 28, **dadurch gekennzeichnet, daß** der Strömungsweg im Bereich seines Austritts aus der Reckstange (11) schräg zur Längsachse (57) der Reckstange (11) verläuft.

30. Vorrichtung nach Anspruch 29, **dadurch gekennzeichnet, daß** ein in Richtung auf den Behälterboden zwischen der Längsachse (57) der Reckstange (11) und an der Längsachse (75) des Strömungsweges gemessener Neigungswinkel (76) einen Wert im Bereich von 20 ° bis 80 ° aufweist.

31. Vorrichtung nach einem der Ansprüche 18 bis 30, **dadurch gekennzeichnet, daß** im Bereich der Reckstangenkuppe (51) eine Mehrzahl von düsenartigen Ausströmöffnungen für das unter Druck stehende Gas angeordnet sind.

## Claims

1. Method for the blow moulding of containers (2), in which a preform (1) is stretched by a drawing bar (11) within a blow mould (4) after a thermal conditioning and is reshaped into the container (2) by means of the blowingpressure effect, and in which pressurized gas is introduced into the container (2) through the drawing bar (11), wherein at least one part of the pressurized gas is directed through the drawing bar (11) against a base region of the container (2), **characterized in that** the pressurized gas is only directed against the base region in the case of an inner pressure within the container (2) of at least 10 bar, wherein at least 50% of the amount of the gas flowing into the container (2) is directed against the base region, namely at least 50% of the overall pressurized gas required for reshaping the preform into the container.

2. Method according to Claim 1, **characterized in that** the pressurized gas is at least periodically supplied via two different flow paths.

3. Method according to Claim 1 or 2, **characterized in that** the pressurized gas is directed through the drawing bar (11) .

4. Method according to any one of the Claims 1 to 3, **characterized in that** a pressure dissipation at least partially takes place through the drawing bar (11).

5. Method according to any one of the Claims 1 to 4, **characterized in that** the pressurized gas is directed against the base region in the case of an inner pressure of at least 20 bar within the container (2).

6. Method according to any one of the Claims 1 to 5, **characterized in that** the pressurized gas is directed against the base region at least one second after the blowing process starts.

7. Method according to any one of the Claims 1 to 5, **characterized in that** the pressurized gas is directed against the base region at least 0.5 seconds after the blowing process starts.

8. Method according to any one of the Claims 1 to 5, **characterized in that** the pressurized gas is directed against the base region at least 0.25 seconds after the blowing process starts.

9. Method according to any one of the Claims 1 to 8, **characterized in that** at least 80% of the amount of the gas flowing into the container (2) is directed against the base region.

10. Method according to any one of the Claims 1 to 9, **characterized in that** the pressurized gas flows against the base region starting from an upper part of the drawing bar (11) facing the base region.

11. Method according to Claim 10, **characterized in that** the pressurized gas flows out of the drawing bar (11) at a maximum of 2.5 centimetres away from a drawing bar end (51) .

12. Method according to Claim 10, **characterized in that** the pressurized gas flows out of the drawing bar (11) out at a maximum of 1.0 centimetres away from a drawing bar end (51) .

13. Method according to any one of Claims 1 to 12, **characterized in that**, a partial gas dissipation is carried out from the container (2) after reaching a maximum pressure level within the container (2) at the latest without substantially lowering of the pressure level.

14. Method according to any one of Claims 1 to 13, **characterized in that** the flow direction of the gas flowing into the container (2) is changed at least temporarily.

15. Method according to any one of Claims 1 to 14, **characterized in that** the pressurized gas is introduced into the container (2) during a first process phase of the bias process at a distance to the base region.

16. Method according to any one of Claims 1 to 15, **characterized in that** the pressurized gas is only directed against the base region during a second process phase.

17. Method according to any one of Claims 1 to 16, **characterized in that** the finished blown container (2) is removed from the blow mould no later than 1. 5 seconds after inserting the preform (1) into the blow mould.

18. Device for the blow moulding of containers (2), which comprises at least one blowing station (3) with at least one blow mould (4), as well as at least one drawing bar (11), and in which the drawing bar (11) is connected to a supply device for supplying pressurized gas, wherein the drawing bar (11) comprises at least one flow path leading up into the region of a drawing bar end (51) for the pressurized gas for blow moulding in order to direct the blowing gas through the drawing bar (11) against a base region of the container (2), wherein the device is designed in such a way that at least one part of the pressurized gas for blow moulding is directed through the drawing bar (11) against a base region of the container (2), **characterized in that** the pressurized gas is only directed against the base region in the case of an inner pressure within the container (2) of at least 10 bar, wherein at least 50% of the amount of the gas flowing into the container (2) is directed against the base region, namely at least 50% of the overall pressurized gas required for reshaping the preform into the container.

19. Device according to Claim 18, **characterized in that** at least two flow paths run through the drawing bar (11).

20. Device according to any one of Claims 18 or 19, **characterized in that** the flow path is designed for the supply of compressed gas for forming containers.

21. Device according to any one of Claims 18 to 20, **characterized in that** at least two flow paths are designed for the supply of pressurized gas at different pressure levels.

22. Device according to any one of Claims 18 to 21, **characterized in that** the drawing bar (11) comprises an interior space enclosed by side walls (50) and that the interior space (50) is connected to a compressed gas supply via a plurality of recesses in the wall.

23. Device according to any one of Claims 18 to 22, **characterized in that** at least one control element is arranged in the region of each flow path for the implementation of a valve function.

24. Device according to any one of Claims 18 to 23, **characterized in that** the region of the drawing bar end (51) starting from one end of the drawing bar (11) has a length dimension of no more than 2.5 centimetres.

25. Device according to any one of Claims 18 bis 23, **characterized in that** the region of the drawing bar end (51) starting from one end of the drawing bar (11) has a length dimension of no more than 1.0 centimetres.

26. Device according to any one of Claims 18 to 25, **characterized in that** the blowing station (3) comprises a leakage valve for specifying a defined leakage flowing out of the container (2).

27. Device according to any one of Claims 18 to 26, **characterized in that** the flow path passing through the drawing bar (11) is formed in a geometrically variable manner at least in sections.

28. Device according to Claim 27, **characterized in that** at least one part of the flow path is at least partially sealable.

29. Device according to any one of Claims 18 to 28, **characterized in that** the flow path in the region of its discharge from the drawing bar (11) runs obliquely to the longitudinal axis (57) of the drawing bar (11).

30. Device according to Claim 29, **characterized in that** an inclination angle (76) measured in the direction of the container base between the longitudinal axis (57) of the drawing bar (11) and at the longitudinal axis (75) of the flow path has a value within a range of 20° to 80°.

31. Device according to any one of Claims 18 to 30, **characterized in that** a plurality of nozzle-like outflow openings for the pressurized gas are arranged in the region of the drawing bar end (51).

## Revendications

1. Procédé de moulage par soufflage de récipients (2), dans le cadre duquel une préforme (1), après un conditionnement thermique, est étirée par une barre d'étirage (11) à l'intérieur d'un moule de soufflage (4) et, sous l'action d'une pression de soufflage, transformée en un récipient (2), et dans le cadre duquel un gaz sous pression est introduit à travers la barre d'étirage (11) dans le récipient (2), une partie au moins du gaz sous pression étant dirigée à travers la barre d'étirage (11) contre une zone de fond du récipient (2) en vue du moulage par soufflage, **caractérisé en ce que** le gaz sous pression n'est dirigé contre le fond du récipient que lorsque la pression à l'intérieur du récipient (2) atteint au moins 10 bars, 50 % au moins de la quantité de gaz affluant dans le récipient (2) étant dirigés contre la zone de fond, à savoir au moins 50 % de la quantité totale de gaz comprimé requise pour la transformation de la préforme en récipient.

2. Procédé selon la revendication 1, **caractérisé en ce que** le gaz sous pression est, temporairement au moins, amené par deux voie d'écoulement différentes.

3. Procédé selon la revendication 1 ou 2, **caractérisé en ce que** le gaz sous pression est conduit à travers la barre d'étirage (11).

4. Procédé selon l'une des revendications 1 à 3, **caractérisé en ce qu'**une évacuation de pression a, partiellement au moins, lieu à travers la barre d'étirage (11).

5. Procédé selon l'une des revendications 1 à 4, **caractérisé en ce que** le gaz sous pression est dirigé contre la zone de fond du récipient (2) lorsque la pression à l'intérieur de celui-ci atteint au moins 20 en bars.

6. Procédé selon l'une des revendications 1 à 5, **caractérisé en ce que** le gaz sous pression est dirigé contre la zone de fond du récipient au plus tard 1 seconde après le début du processus de soufflage.

7. Procédé selon l'une des revendications 1 à 5, **caractérisé en ce que** le gaz sous pression est dirigé contre la zone de fond au plus tard 0,5 seconde après le début du processus de soufflage.

8. Procédé selon l'une des revendications 1 à 5, **caractérisé en ce que** le gaz sous pression est dirigé contre la zone de fond au plus tard 0,25 seconde après le début du processus de soufflage.

9. Procédé selon l'une des revendications 1 à 8, **caractérisé en ce que** 80 % au moins de la quantité de gaz affluant dans le récipient (2) est dirigée contre la zone de fond.

10. Procédé selon l'une des revendications 1 à 9, **caractérisé en ce que** le gaz sous pression afflue contre la zone de fond à partir d'une partie supérieure de la barre d'étirage (11) faisant face à la zone de fond.

11. Procédé selon la revendication 10, **caractérisé en ce que** le gaz sous pression s'échappe d'une partie de la barre d'étirage située à 2,5 centimètres au plus du bout arrondi (51) de la barre d'étirage (11).

12. Procédé selon la revendication 10, **caractérisé en ce que** le gaz sous pression s'échappe d'une partie de la barre d'étirage située à 1,0 centimètres au plus du bout arrondi (51) de la barre d'étirage (11).

13. Procédé selon l'une des revendications 1 à 12, **caractérisé en ce que,** au plus tard après qu'un niveau de pression maximal ait été atteint à l'intérieur du récipient (2), une évacuation partielle du gaz hors du récipient (2) est effectuée sans baisse notable du niveau de pression.

14. Procédé selon l'une des revendications 1 à 13, **caractérisé en ce que** le sens d'écoulement du gaz affluant dans le récipient (2) est modifié au moins temporairement.

15. Procédé selon l'une des revendications 1 à 14, **caractérisé en ce que** le gaz sous pression est, pendant une première phase du processus de soufflage, introduit dans le récipient (2) à une certaine distance de la zone de fond.

16. Procédé selon l'une des revendications 1 à 15, **caractérisé en ce que** le gaz sous pression n'est dirigé contre la zone de fond que pendant une seconde phase du processus de soufflage.

17. Procédé selon l'une des revendications 1 à 16, **caractérisé en ce que** le récipient moulé (2) fini est extrait du moule de soufflage au plus tard 1,5 secondes après l'introduction de la préforme (1) dans le moule de soufflage.

18. Dispositif de moulage par soufflage de récipients (2) présentant au moins une station de soufflage (3) avec au moins un moule de soufflage (4) ainsi qu'au moins une barre d'étirage (11), et dont la barre d'étirage (11) est branchée sur un dispositif d'alimentation amenant du gaz sous pression, la barre d'étirage (11) présentant au moins une voie d'écoulement du gaz de moulage par soufflage sous pression, cette voie aboutissant au niveau d'un bout arrondi (51) de la barre d'étirage pour canaliser le gaz de soufflage à travers la barre d'étirage (11) et l'amener contre une zone de fond du récipient (2), le dispositif étant conçu de façon à ce qu'une partie au moins du gaz sous pression soit dirigée à travers la barre d'étirage (11) contre une zone de fond du récipient (2) en vue du moulage par soufflage, **caractérisé en ce que** le gaz sous pression n'est dirigé contre le fond du récipient que lorsque la pression à l'intérieur du récipient (2) atteint au moins 10 bars, 50 % au moins de la quantité de gaz affluant dans le récipient (2) étant dirigés contre la zone de fond, à savoir au moins 50 % de la quantité totale de gaz comprimé requise pour la transformation de la préforme en récipient.

19. Dispositif selon la revendication 18, **caractérisé en ce que** deux voies d'écoulement au moins traversent la barre d'étirage (11).

20. Dispositif selon l'une des revendications 18 ou 19, **caractérisé en ce que** la voie d'écoulement est façonnée pour l'adduction de gaz comprimé pour former le récipient.

21. Dispositif selon l'une des revendications 18 à 20, **caractérisé en ce que** il comporte au moins deux voies d'écoulement pour l'adduction de gaz sous pression à deux niveaux de pression différents.

22. Dispositif selon l'une des revendications 18 à 21, **caractérisé en ce que** la barre d'étirage (11) comporte un espace intérieur (50) confiné par des parois latérales, cet espace intérieur (50) étant branché sur une alimentation en gaz sous pression par une pluralité d'évidements dans la paroi.

23. Dispositif selon l'une des revendications 18 à 22, **caractérisé en ce que** un élément de réglage au moins est agencé au niveau de chaque voie d'écoulement pour réaliser une fonction de valve.

24. Dispositif selon l'une des revendications 18 à 23, **caractérisé en ce que** le dimensionnement maximal en longueur du bout arrondi (51) de la barre d'étirage est de 2,5 centimètre partant d'une extrémité de la barre d'étirage (11).

25. Dispositif selon l'une des revendications 18 à 23, **caractérisé en ce que** le dimensionnement maximal en longueur du bout arrondi (51) de la barre d'étirage est de 1,0 centimètre partant d'une extrémité de la barre d'étirage (11).

26. Dispositif selon l'une des revendications 18 à 25, **caractérisé en ce que** la station de soufflage (3) est dotée d'une valve de fuite permettant d'obtenir un flux défini de fuite hors du récipient (2).

27. Dispositif selon l'une des revendications 18 à 26, **caractérisé en ce que** la voie d'écoulement qui traverse la barre d'étirage (11) présente, en partie au moins, une géométrie variable.

28. Dispositif selon la revendication 27, **caractérisé en ce que** une partie au moins de la voie d'écoulement est au moins partiellement conformée de façon à pouvoir être obturée.

29. Dispositif selon l'une des revendications 18 à 28, **caractérisé en ce que** au niveau de sa sortie de la barre d'étirage (11), la voie d'écoulement est oblique par rapport à l'axe longitudinal (57) de la barre d'étirage (11).

30. Dispositif selon la revendication 29, **caractérisé en ce que** un angle d'inclinaison (76) mesuré en direction du fond du récipient entre l'axe longitudinal (57) de la barre d'étirage (11) et l'axe longitudinal (75) de la voie d'écoulement a une valeur comprise entre 20° et 80°.

31. Dispositif selon l'une des revendications 18 à 30, **caractérisé en ce que** une pluralité d'orifices d'écoulement du gaz sous pression est agencée au niveau du bout arrondi (51) de la barre d'étirage.
